# FASCICULE DE BREVET EUROPEEN

(11) **EP 3 305 631 B1**
(45) Date de publication et mention de la délivrance du brevet: **06.11.2019**
(21) Numéro de dépôt: 17190387.5
(22) Date de dépôt: 11.09.2017
(51) Int. Cl.: B62D 25/20, B60N 2/015, F16B 37/04

(54) **PROCÉDÉ DE MONTAGE D'UN PLANCHER D'UNE STRUCTURE DE CAISSE D'UN VÉHICULE AUTOMOBILE**
VERFAHREN ZUR MONTAGE EINES BODENS EINER KAROSSERIESTRUKTUR EINES KRAFTFAHRZEUGS
ASSEMBLY METHOD OF A FLOOR OF A BODY SHELL STRUCTURE OF A MOTOR VEHICLE

(30) Priorité: 07.10.2016 FR 1659721
(43) Date de publication de la demande: 11.04.2018
(73) Titulaire: RENAULT s.a.s., 92100 Boulogne-Billancourt (FR)
(72) Inventeur: VINIAL, Christophe, 91220 LE PLESSIS PATE (FR); SAINT-GERMAIN, Benoit, 78000 VERSAILLES (FR)

(56) Documents cités:
- EP-A1- 2 009 298
- EP-A2- 1 975 042
- DE-A1-102009 006 255

## Description

La présente invention concerne un élément de renfort pour une traverse de parclose d'un plancher d'une structure de caisse d'un véhicule automobile. L'invention concerne également un procédé de montage d'au moins un élément de renfort pour la traverse de parclose dans le plancher de la structure de caisse du véhicule.

L'invention concerne aussi un tel plancher du véhicule automobile comprenant la traverse de parclose et au moins un élément de renfort, et la structure de caisse comportant un tel plancher ainsi que le véhicule automobile pourvu d'une telle structure de caisse.

Dans l'état de la technique, une structure de caisse d'un véhicule automobile comprend classiquement un plancher délimitant une partie inférieure de l'habitacle en s'étendant d'un tablier séparant cet habitacle du compartiment moteur, vers une extrémité du coffre de ce véhicule. Ce plancher est pourvu d'une partie arrière appelée « plancher arrière » reliée à une partie avant appelée « plancher avant » par un épaulement, appelé « traverse de parclose » ou « parclose ». Cette partie arrière du plancher est en particulier formée d'un assemblage de pièces notamment en tôle reliées entre elles telles qu'un plancher supérieur recouvrant un plancher inférieur et une partie de la traverse de parclose, qui participent à la fixation à ce plancher de sièges de rang arrière.

Toutefois, un inconvénient majeur d'un plancher d'une telle structure de caisse de véhicule automobile est lié aux dispersions résultant d'un tel assemblage de pièces en tôle qui ont pour conséquences d'induire notamment dans le cadre du montage de sièges de rang arrière dans cette structure, un nombre important d'opérations techniques complexes ainsi que de pièces supplémentaires pour assurer la fixation de ces sièges au plancher malgré la présence de ces dispersions.

Le document EP 2 009 298 A1 décrit un plancher d'une structure de caisse d'un véhicule automobile comprenant une traverse de parclose et au moins un élément de renfort pour ladite traverse de parclose agencé à une extrémité de ladite traverse de parclose.

La présente invention vise à pallier ces inconvénients liés à l'état de la technique.

Dans ce dessein, l'invention porte sur un procédé de montage d'un plancher d'une structure de caisse d'un véhicule automobile comprenant une traverse de parclose et au moins un élément de renfort pour ladite traverse de parclose agencé à une extrémité de ladite traverse de parclose, l'élément de renfort étant pourvu de première, deuxième et troisième composantes, les première et deuxième composantes étant assemblées l'une à l'autre en définissant une zone de fixation à rattrapage de dispersion comprenant la troisième composante conformée pour coopérer avec un élément de liaison d'un siège arrière dudit véhicule, le procédé comprenant une étape de mise en place dudit au moins un élément de renfort entre la traverse de parclose et un plancher arrière du plancher de la structure de caisse et une étape de fixation dudit au moins un élément de renfort à ladite traverse de parclose et audit plancher arrière.

Dans d'autres modes de réalisation :
- la zone de fixation dudit élément de renfort comprend un logement comportant la troisième composante, cette dernière étant constituée d'une plaquette de fixation.
- la troisième composante est agencée mobile dans une enceinte d'un logement de la zone de fixation en étant susceptible de réaliser des déplacements en translation selon une direction longitudinale et/ou une direction transversale.
- un logement de la zone de fixation comprend des parois supérieure et inférieure pourvues chacune d'une ouverture, et/ou un logement de la zone de fixation comprend des parois latérales, avant et arrière définies dans une partie supérieure de la deuxième composante et qui sont reliées entre elles uniquement par une paroi inférieure dudit logement, et/ou les parois supérieure et inférieure d'un logement de la zone de fixation sont définies respectivement dans des parties supérieures des première et deuxième composantes.
- les première et deuxième composantes comprennent des premières régions de fixation permettant de les relier mécaniquement l'une à l'autre, et/ou des deuxièmes régions de fixation permettant de relier mécaniquement ledit élément de renfort à la traverse de parclose, et/ou des troisièmes régions de fixation permettant de relier mécaniquement ledit élément de renfort au plancher de la structure de caisse dans la zone du plancher arrière.

Avantageusement, le procédé comprend une étape d'assemblage des première et deuxième composantes de l'élément de renfort entre elles en définissant une zone de fixation à rattrapage de dispersion comprenant une troisième composante de cet élément de renfort.

D'autres avantages et caractéristiques de l'invention apparaîtront mieux à la lecture de la description d'un mode de réalisation préféré qui va suivre, en référence aux figures, réalisé à titre d'exemple indicatif et non limitatif :
- la figure 1 représente une vue d'une structure de caisse d'un véhicule automobile comprenant un plancher pourvu d'une traverse de parclose comportant deux éléments de renforts, selon le mode de réalisation de l'invention ;
- la figure 2 représente une vue à plus grande échelle d'une partie référencée A de la figure 1 relative à une extrémité de la traverse de parclose comprenant l'élément de renfort, selon le mode de réalisation de l'invention ;
- la figure 3 représente une vue en perspective de dessus de l'élément de renfort pour la traverse de parclose, selon le mode de réalisation de l'invention ;
- la figure 4 représente une vue en perspective de dessous de l'élément de renfort pour la traverse de parclose, selon le mode de réalisation de l'invention ;
- la figure 5 représente une vue éclatée en perspective de l'élément de renfort pour la traverse de parclose, selon le mode de réalisation de l'invention, et
- la figure 6 représente un logigramme relatif à un procédé de montage de l'élément de renfort pour la traverse de parclose dans le plancher de la structure de caisse du véhicule, selon le mode de réalisation de l'invention.

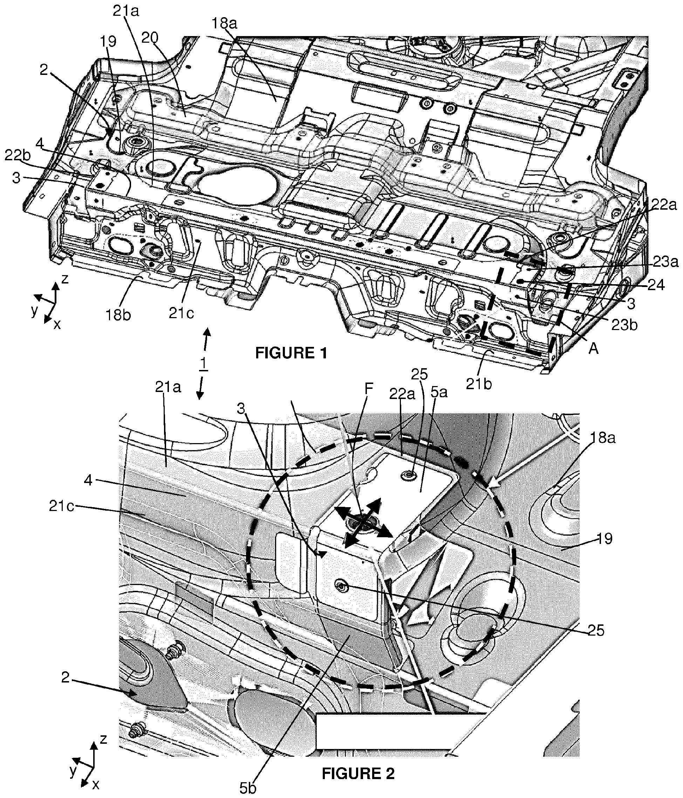

La description est faite en référence à un trièdre X, Y, Z, illustré sur les figures 1 et 2, qui est associé classiquement à un véhicule automobile et dans lequel X est la direction longitudinale avant-arrière du véhicule dirigée vers l'arrière, Y est la direction transversale droite-gauche au véhicule, qui est horizontale et perpendiculaire à X, dirigée vers la droite, et Z est la direction verticale dirigée vers le dessus. Par ailleurs, les termes « avant, arrière, droit, gauche, horizontal, vertical, supérieur, inférieur » sont définis par rapport au sens de déplacement du véhicule.

Dans la description qui va suivre, des chiffres de référence identiques désignent des pièces identiques ou ayant des fonctions similaires.

Dans un mode de réalisation de l'invention, un véhicule automobile comprend une structure de caisse 1 représentée en partie sur les figures 1 et 2, pourvue d'un plancher 2 limitant une partie inférieure d'un habitacle du véhicule en s'étendant d'un tablier s'éparant un compartiment moteur de l'habitacle, jusqu'à une extrémité du coffre du véhicule. Ce plancher 2 est pourvu d'une partie arrière 18a appelée « plancher arrière » reliée à une partie avant 18b appelée « plancher avant » par un épaulement, ou paroi transversale, appelé « traverse de parclose » ou « parclose ». Plus précisément, cette traverse de parclose 4 s'étendant transversalement dans la structure de caisse 1, est en partie reliée mécaniquement en ses extrémités au plancher arrière 18a par au moins un élément de renfort 3, ici deux, qui est décrit par la suite. Cette traverse de parclose 4 est située à la limite entre le plancher avant 18b et le plancher arrière 18a intégrant les sièges de rang arrière autrement appelés « sièges de rang deux » ainsi que le coffre du véhicule. Autrement dit, cette traverse de parclose 4 raccorde les planchers avant et arrière du plancher 2 de la structure de caisse 1. Dans cette configuration, on notera que les siège peuvent être des sièges monoplaces de type banquette 1/3-2/3 par exemple.

Dans le plancher 2 de cette structure de caisse 1, le plancher arrière 18a est légèrement surélevé par rapport au plancher avant 18b. Ce plancher arrière 18a s'étend de la traverse de parclose 4 vers l'arrière du véhicule selon une direction longitudinale X et également transversalement sensiblement sur toute la largeur du véhicule. Ce plancher arrière 18a est constitué d'un plancher inférieur fixé à un plancher supérieur 19, le plancher inférieur étant recouvert en tout ou partie par ce plancher supérieur 19. Sur ce plancher supérieur 19 et donc sur le plancher arrière 18a, est agencé un profilé 20 s'étendant transversalement dans le plancher 2 et qui est notamment prévu pour comprendre des zones de fixation au niveau desquelles sont fixés des éléments de liaison des sièges arrières du véhicule. Dans cette configuration, d'autres éléments de liaison de ces sièges sont fixés à la traverse de parclose 4 ainsi qu'à l'élément de renfort 3.

On notera que les planchers inférieur et supérieur 19 ainsi que la traverse de parclose 4 et le profilé 20 sont des pièces métalliques réalisées de préférence en tôle.

La traverse de parclose 4 comprend des parties haute et basse 21a, 21b ainsi qu'une partie centrale 21c reliant ces parties haute et basse 21a, 21b entre elles. Cette partie centrale 21c s'étend longitudinalement sur toute la largeur du véhicule et présente une largeur sensiblement similaire au dénivelé présent entre les planchers avant et arrière 18a, 18b. Cette partie centrale 21c est sensiblement verticale lorsque la traverse de parclose 4 est montée dans le plancher 2 de la structure de caisse 1. On notera que les parties haute et basse 21a, 21b sont comprises de préférence dans des plans parallèles entre eux.

La traverse de parclose 4 comprend deux extrémités 22a, 22b comprenant des orifices 23a, 23b définis dans la partie haute 21a et la partie centrale 21c prévus pour participer au positionnement de chaque élément de renfort 3 lors de son montage dans le plancher 2 du véhicule. Ces extrémités comprennent également une ouverture 24 ménagée dans la partie haute 21a.

La partie haute 21a de cette traverse de parclose 4 comprend trois zones de liaison définies sur une face intérieure de ladite partie 21a. Plus précisément, elle comprend :
- une zone de liaison centrale susceptible d'être reliée à une face extérieure du plancher arrière 18a et en particulier du plancher supérieur 19 notamment par des points de soudure, et
- deux zones de liaison définies aux extrémités 22a, 22b de cette partie haute 21a et qui sont prévues pour être reliées mécaniquement chacun à l'élément de renfort 3.

Dans cette traverse de parclose 4, la partie basse 21b comprend aussi une zone de liaison définie sur une face intérieure de ladite partie 21b et qui est prévue pour relier mécaniquement un bord arrière du plancher avant 18b à la traverse de parclose 4.

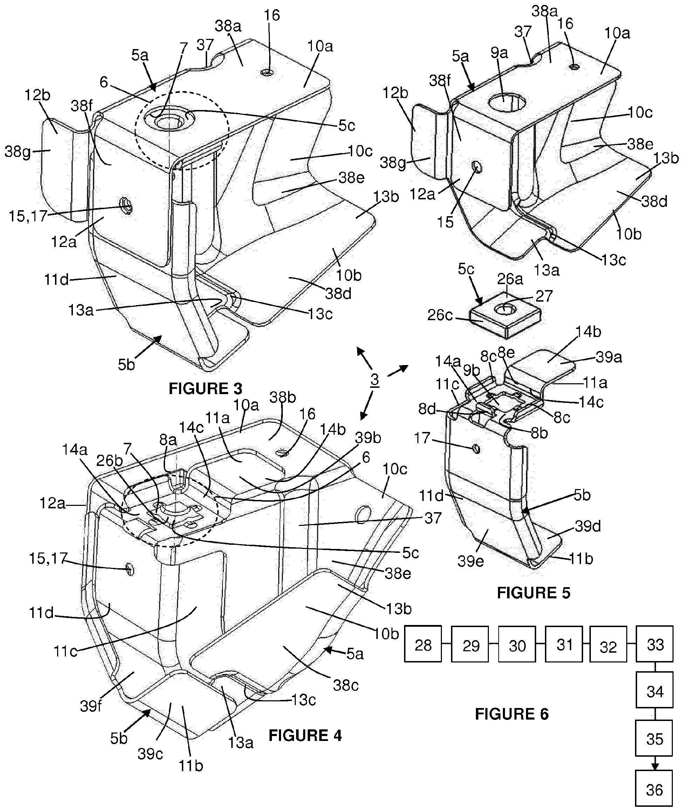

Dans ce plancher 2, en référence aux figures 3 à 5, chaque élément de renfort 3 comprend des première, deuxième et troisième composantes 5a, 5b, 5c. Les première et deuxième composantes 5a, 5b, sont assemblées entre elles en définissant une zone de fixation 6 à rattrapage de dispersion comprenant la troisième composante 5c. Cette zone de fixation 6 est prévue pour coopérer avec un élément de liaison d'un siège arrière dudit véhicule. La zone de fixation 6 est en particulier prévue pour rattraper les dispersions pouvant résulter de l'assemblage de la traverse de parclose 4, du profilé de fixation et des planchers supérieur et inférieur entre eux. Des dispersions sont également générées par l'armature (structure) des sièges de rang arrière lors de sa fabrication. De telles dispersions sont surmontées grâce à la zone de fixation à rattrapage de dispersion dans le cadre du montage des sièges de rang arrière au niveau du plancher 2 de la structure de caisse 1 du véhicule.

La première composante 5a comprend des parties supérieure, inférieure et latérale 10a, 10b, 10c. Les parties supérieure et inférieure 10a, 10b sont reliées entre elles par la partie latérale 10c. Ces parties supérieure et inférieure 10a, 10b sont comprises respectivement dans des plans sensiblement parallèles entre eux. Ces plans sont notablement perpendiculaires à un plan comprenant la partie latérale 10c. La première composante 5a en comprenant ces parties supérieure, inférieure et latérale 10a, 10b, 10c, a essentiellement la forme d'un « U ».

La partie supérieure 10a de la première composante 5a comprend un bord frontal 12a en tout ou partie courbé orienté en direction d'un bord frontal de la partie inférieure 10b de cette première composante 5a. Dans le présent mode de réalisation, tout le bord frontal 12a de cette partie supérieure 10a est courbé. On notera que ce bord courbé 12a est compris dans un plan qui est sensiblement perpendiculaire au plan comprenant la partie supérieure 10a. Cette partie supérieure 10a comprend également une ouverture 9a et un orifice 16 reliant des faces intérieure et extérieure 38a, 38b de cette partie 10a entre elles. Le bord courbé 12a de cette partie supérieure 10a comprend également un orifice central 15.

La partie inférieure 10b de la première composante 5a comprend des première, deuxième et troisièmes parties 13a, 13b, 13c. Les première et deuxième parties 13a, 13b qui présentent un dénivelé entre elles, sont reliées l'une à l'autre par la troisième partie 13c. Ces première et deuxième parties 13a, 13b de la partie inférieure 10b sont de préférence respectivement comprises dans des plans parallèles entre eux.

La partie latérale 10c de la première composante 5a comprend également un bord frontal 12b en tout ou partie courbé. Dans le présent mode de réalisation, seule une partie de ce bord 12b est courbé et s'étend en s'éloignant d'une face extérieure de ladite partie latérale 10c en étant défini de préférence perpendiculairement à cette partie latérale 10c.

On notera que les bords courbés 12a, 12b peuvent être compris dans un même plan.

Cette partie latérale 10c comprend au moins une zone de rigidification 37 correspondant à une portion déformée de cette partie 10c. Cette zone de rigidification 37 s'étend dans tout ou partie de cette partie latérale 10c entre des bords latéraux des parties supérieure et inférieure 10a, 10b. Plus précisément, cette zone de rigidification 37 s'étend verticalement dans l'épaisseur de cette partie latérale 10c. Cette zone de rigidification 37 peut être une nervure emboutie encore appelée simplement nervure et ayant une section en forme de « U » qui est ouverte au niveau d'une face extérieure de cette partie latérale 10c. On notera que cette zone de rigidification 37 permet notamment de limiter voire d'éviter les déformations et le déboutonnage de l'élément de renfort 3 afin de garantir l'intégrité du plancher 2 de la structure de caisse 1 du véhicule lorsque ce dernier subit un choc notamment un choc latéral. Autrement dit, la zone de rigidification 37 évite tout risque de rupture de points de soudures mis en œuvre comme on le verra par la suite, pour relier l'élément de renfort 3 au plancher arrière 18a et à la traverse de parclose 4.

La deuxième composante 5b de l'élément de renfort 3, comprend des parties supérieure, inférieure, latérale et frontale 11a, 11b, 11c, 11d. Dans cette deuxième composante 5b, les parties supérieure, inférieure et latérale 11a, 11b, 11c sont reliées entre elles par la partie frontale 11d. Cette partie frontale 11d s'étend entre les parties supérieure et inférieure 11a, 11b et présente une forme sensiblement courbée. En outre, cette partie frontale 11d comprend un orifice 17 reliant des faces intérieure et extérieure 39e, 39f de cette partie 11d entre elles.

La partie supérieure 11a de cette deuxième composante 5b comprend des première, deuxième et troisième parties 14a, 14b, 14c. Ces première et deuxième parties 14a, 14b présentent un dénivelé entre elles et sont reliées l'une à l'autre par la troisième partie 14c. On notera que ces première et deuxième parties 14a, 14b de la partie supérieure 11a de cette deuxième composante 5b sont de préférence comprises dans des plans parallèles entre eux. La première partie 14a de cette partie supérieure 11a comprend une ouverture 9b reliant des faces intérieure et extérieure 39a, 39b entre elles.

Dans cet élément de renfort 3, les première et deuxième composantes 5a, 5b, comprennent des premières régions de fixation permettant de les relier mécaniquement l'une à l'autre. Ces premières régions de fixation sont définies sur :
- tout ou partie de la face intérieure du bord courbé 12a de la partie supérieure 10a de la première composante 5a ;
- tout ou partie d'une face intérieure 38e de la partie latérale 10c de la première composante 5a à proximité d'un bord frontal de cette partie latérale 10c ;
- tout ou partie d'une face extérieure 38c de la première partie 13a de la partie inférieure 10b de la première composante 5a ;
- une partie de la face intérieure 38b de la partie supérieure 10a de la première composante 5a entre l'ouverture 9a et de l'orifice 16 ménagés dans cette partie supérieure 10a ;
- une partie de la face extérieure 39e de la partie frontale 11d de la deuxième composante 5b agencée en regard de la face intérieure du bord courbé 12a de la partie supérieure 10a de la première composante 5a lorsque ces deux composantes 5a, 5b sont assemblées l'une à l'autre ;
- tout ou partie d'une face extérieure de la partie latérale 11c de la deuxième composante 5b ;
- tout ou partie d'une face intérieure 39d de la partie inférieure 11b de la deuxième composante 5b ;
- tout ou partie d'une face extérieure 39a de la deuxième partie 14b de la partie supérieure 11a de la deuxième composante 5b.

Ces première et deuxième composantes 5a, 5b, comprennent aussi des deuxièmes régions de fixation permettant de relier mécaniquement ces deux composantes et donc l'élément de renfort 3 à la traverse de parclose 4. Ces deuxièmes régions de fixation sont définies sur :
- tout ou partie des faces extérieures 38f, 38g des bords courbés 12a, 12b des parties supérieure et latérale 10a, 10c de la première composante 5a, et
- une partie de la face extérieure 38a de la partie supérieure 10a de la première composante 5a, comprise entre l'ouverture 9a et un bord arrière de cette partie supérieure 10a.

On remarquera que ces deuxièmes régions de fixation sont définies exclusivement dans la première composante 5a de l'élément de renfort 3.

Ces première et deuxième composantes 5a, 5b, comprennent aussi des troisièmes régions de fixation permettant de relier mécaniquement ces deux composantes 5a, 5b et donc l'élément de renfort 3, au plancher supérieur 19 et donc au plancher arrière 18a du véhicule. Ces troisièmes régions de fixation sont définies sur :
- tout ou partie d'une face extérieure 38c de la deuxième partie 13b de la partie inférieure 10b de la première composante 5a, et
- tout ou partie d'une face extérieure 39c de la partie inférieure 11b de la deuxième composante 5b ;

Les premières régions de fixation de ces première et deuxième composantes 5a, 5b, sont reliées mécaniquement entre elles par des points de soudure. De tels points de soudures sont également utilisés pour relier mécaniquement les deuxième et troisième régions de fixation de l'élément de renfort 3, à respectivement la traverse de parclose 4 et le plancher arrière 18a.

Ainsi que nous l'avons évoqué précédemment, l'élément de renfort 3 comprend la zone de fixation 6 à rattrapage de dispersion. Cette zone de fixation 6 est définie pour coopérer avec un élément de de liaison d'un siège arrière du véhicule tel qu'une vis de fixation.

Cette zone de fixation 6 comprend un logement 7 dans lequel est agencé mobile en translation la troisième composante 5c de l'élément de renfort 3 qui est par exemple un élément de fixation tel qu'une plaquette de fixation. Un tel logement 7 comprend des parois supérieure, inférieure et latérales 8a, 8b, 8c.

La paroi supérieure 8a de ce logement 7 comprend une portion de la partie supérieure 10a de la première composante 5a, comportant l'ouverture référencée 9a notamment de forme circulaire.

La paroi inférieure 8b de ce logement 7 comprenant le fond de ce dernier, est définies dans tout ou partie de la première partie 14a de la partie supérieure 11a de la deuxième composante 5b de l'élément de renfort 3. Cette paroi inférieure 8b comporte l'ouverture référencée 9b qui a de préférence la forme d'un quadrilatère.

Les parois latérales et avant 8c, 8d de ce logement 7 sont également définie dans la première partie 14a de la partie supérieure 11a de la deuxième composante 5b de l'élément de renfort 3. Ces parois latérales et avant 8c, 8d correspondent respectivement à des portions des bords avant et latéraux de cette première partie 14a qui sont courbés. En étant ainsi courbés ces bords et donc les parois avant et latérales 8d, 8c sont comprises chacune dans des plans qui forment des angles perpendiculaires ou obtus avec un plan comprenant cette première partie 14a de la partie supérieure 11a. Les parois latérales, avant et arrière 8c, 8d, 8e sont reliées entre elles uniquement par le fond de ce logement 7 c'est-à-dire par la paroi inférieure 8b. Ainsi, les angles formés entre les plans comprenant les parois latérales et avant 8c, 8d avec le plan comportant la paroi inférieure 8b peuvent être configurés de manière à augmenter ou diminuer l'amplitude du déplacement en translation de la troisième composante 5c selon la direction longitudinale X et/ou la direction transversale Y, dans le logement 7. Le sens de ce déplacement est illustré sur la figure 1 par les flèches référencées F.

S'agissant de la paroi arrière 8e de ce logement 7, elle est définie dans la troisième partie 14c de la partie supérieure 11a de la deuxième composante 5b de l'élément de renfort 3.

Ces parois supérieures, inférieures avant, arrières et latérales 8a à 8e définissent une enceinte du logement 7 ayant de préférence la forme d'un parallélépipède rectangle. On comprend ici que l'enceinte comprend un volume qui est variable car pouvant être configuré par la variation des angles définies entre les plans comprenant les parois latérales et avant 8c, 8d, et le plan comportant la paroi inférieure 8b. À titre d'exemple, ces angles peuvent être configurés individuellement de manière à autoriser une absorption d'une dispersion relative à un déplacement de la troisième composante 5c comprise entre -3000 µm et +3000 µm par rapport à l'axe de référence (centre) de l'ouverture 9a et ce dans les sens X et Y.

La troisième composante 5c agencée mobile dans l'enceinte de ce logement 7 comprend des faces supérieure, inférieure 26a, 26b ainsi que quatre faces périphériques 26c. Cette troisième composante 5c a une forme autorisant son insertion ainsi que son déplacement dans l'enceinte de ce logement 7. Cette forme est de préférence similaire à celle de l'enceinte du logement 7, ici la forme parallélépipède rectangle. Cette troisième composante 5c présente en outre un volume qui est de préférence inférieure au volume de l'enceinte de ce logement 7. On notera que lorsque la troisième composante 5c se déplace dans le logement 7, les faces périphériques 26c peuvent alors venir en butée contre les parois avant, arrière et latérales 8c à 8e du logement 7.

La troisième composante 5c comprend une ouverture centrale 27 reliant ses faces supérieure et inférieure 26a, 26b entre elles. Lorsque les première et les deuxième composantes 5a, 5b, sont assemblées l'une à l'autre pour former l'élément de renfort 3, cette ouverture centrale 27 de la troisième composante 5c et les ouvertures 9a, 9b de ces composantes 5a, 5b ainsi que l'ouverture 24 de la partie haute 21c en extrémité 22a, 22b de la traverse de parclose 4 sont agencées les unes par rapport aux autres de manière à pouvoir être traversées par l'élément de liaison du siège arrière du véhicule susceptible d'être fixé sur la traverse de parclose 4.

En référence à la figure 6, l'invention porte également sur un procédé de montage d'au moins un élément de renfort 3 pour la traverse de parclose 4 dans le plancher 2 de la structure de caisse 1 du véhicule.

Ce procédé comprend une étape d'assemblage 28 des première et deuxième composantes 5a, 5b, entre elles. Lors de cette étape 28, la troisième composante 5c est agencée dans une partie de l'enceinte du logement 7 définie dans la première partie 14a de la partie supérieure 11a de la deuxième composante 5b et les premières régions de fixation de ces deux composantes de l'élément de renfort 3 sont reliées mécaniquement les unes aux autres. Plus précisément, durant cette étape 28 :
- tout ou partie de la face intérieure du bord courbé 12a de la partie supérieure 10a de la première composante 5a est reliée mécaniquement notamment à partir de points de soudure, à la partie de la face extérieure 39e de la partie frontale 11d de la deuxième composante 5b agencée en regard de cette face intérieure de ce bord courbé 12a de la partie supérieure 10a de la première composante 5a ;
- tout ou partie de la face intérieure 38e de la partie latérale 10c de la première composante 5a définie à proximité du bord frontal de cette partie latérale 10c est reliée mécaniquement notamment à partir de points de soudure, à tout ou partie de la face extérieure de la partie latérale 11c de la deuxième composante 5b ;
- tout ou partie d'une face extérieure 38c de la première partie 13a de la partie inférieure 10b de la première composante 5a est reliée mécaniquement notamment à partir de points de soudure, à tout ou partie de la face intérieure 39d de la partie inférieure 11b de la deuxième composante 5b, et
- une partie de la face intérieure 38b de la partie supérieure 10a de la première composante 5a située entre l'ouverture 9a et l'orifice 16 ménagés dans cette partie supérieure 10a est reliée mécaniquement notamment à partir de points de soudure, à tout ou partie de la face extérieure 39a de la deuxième partie 14b de la partie supérieure 11a de la deuxième composante 5b.

On notera que le dénivelé défini entre les première et deuxième parties 13a, 13b de la partie inférieure 10b de la première composante 5a, contribue à ce que la partie inférieure 11b de la deuxième composante 5b est comprise dans un même plan que la deuxième partie 13b de la partie inférieure 10b de la première composante 5a.

Ce procédé comprend ensuite une étape de mise en place 29 dudit au moins un élément de renfort 3 entre la traverse de parclose 4 et un plancher arrière 18a du plancher 2 de la structure de caisse 1. Cette étape 29 comprend une sous-étape de liaison de positionnement 30 dudit au moins un élément de renfort 3 à l'extrémité 22a, 22b de la traverse de parclose 4. On comprend ici que lorsque la traverse de parclose 4 est pourvue de deux éléments de renfort ceux-ci sont alors agencés à chacune de ses extrémités 22a, 22b. Durant la réalisation de cette sous-étape 30, la traverse de parclose 4 n'est pas encore assemblée au plancher 2 de la structure de caisse 1 du véhicule. Lors de cette sous-étape 30, les orifices 15, 16, 17 définis dans le bord courbé 12a et la partie supérieure 10a de la première composante 5a ainsi que dans la partie frontale 11c de la deuxième composantes 5b sont agencés de manière coaxiale aux orifices 23a, 23b correspondant ménagés dans les parties haute et centrale 21a, 21c de cette extrémité 22a, 22b de la traverse de parclose 4. Dans cette configuration, l'élément renfort 3 est alors maintenu dans cette position par des rivets 24 qui sont agencés dans ces orifices 15, 16, 17. De plus l'ouverture 9a du logement 7 de l'élément de renfort 3 est également agencée coaxialement avec l'ouverture 24 de cette extrémité 22a, 22b. Lors de cette sous-étape de liaison 30, les deuxièmes régions de fixation sont agencées en regard voire en contact avec la traverse de parclose 4, en particulier :
- tout ou partie des faces extérieures 38f, 38g des bords courbés 12a, 12b des parties supérieure et latérale 10a, 10c de la première composante 5a sont agencées en regard voire en contact avec la partie centrale 21c de la traverse de parclose 4, et
- la partie de la face extérieure 38a de la partie supérieure 10a de la première composante 5a, comprise entre l'ouverture 9a et le bord arrière de cette partie supérieure 10a est agencée en regard voire en contact avec la face intérieure de la partie haute 21a de la traverse de parclose 4 ;

Cette étape 29 comprend ensuite une sous-étape d'agencement 31 de la traverse de parclose 4 comprenant au moins un élément de renfort 3 dans la structure de caisse 1 du véhicule. Lors de cette sous-étape 31, les parties haute et basse 21a, 21b de la traverse de parclose 4 et ledit au moins un élément de renfort 3 sont positionnés dans la structure de caisse 1. Cette sous-étape 31 comprend une première phase de disposition 32 de la partie haute 21a de la traverse de parclose 4 et dudit au moins élément de renfort 3 en regard voire en contact avec le plancher arrière 18a de la structure de caisse 1. Plus précisément, lors de cette première phase une portion de la face intérieure de la partie haute 21a de la traverse de parclose 4 comprise entre les deux extrémités de cette partie haute 21a pouvant comprendre chacune un élément de renfort 3, est agencée en regard voire en contact avec le plancher arrière 18a en particulier avec le plancher supérieur 19. Durant cette phase 32, les troisièmes régions de fixation de l'élément de renfort 3 sont également agencées en regard voire en contact avec le plancher arrière 18a et donc avec le plancher supérieur 19, il s'agit en particulier de :
- tout ou partie de la face extérieure 38c de la deuxième partie 13b de la partie inférieure 10b de la première composante 5a, et
- tout ou partie de la face extérieure 39c de la partie inférieure 11b de la deuxième composante 5b.

La sous-étape 31 d'agencement comprend une deuxième phase de disposition 33 de la partie basse 21b de la traverse de parclose 4 sur le plancher avant 18b de la structure de caisse 1. Lors de cette deuxième phase 33, la face intérieure de la partie basse 21b est agencée en regard voire en contact avec le plancher avant 18b de la structure de caisse 1 notamment avec le bord arrière ce plancher avant 18b.

Le procédé comprend ensuite une étape de fixation 34 dudit au moins un élément de renfort 3 à ladite traverse de parclose 4 et audit plancher arrière 18a.

Cette étape 34 comprend une sous-étape de réalisation 35 d'une liaison mécanique entre ledit au moins un élément de renfort 3 et le plancher 2 de la structure de caisse 1 notamment avec la traverse de parclose 4 et le plancher arrière 18a de ce plancher 2. Lors de cette sous-étape 35, les deuxième et troisième régions de fixation de l'élément de renfort 3 sont reliées mécaniquement par des points de soudure, à respectivement la traverse de renfort et le plancher arrière 18a. Plus précisément, durant cette sous-étape 35 :
- tout ou partie des faces extérieures 38f, 38g des bords courbés 12a, 12b des parties supérieure et latérale 10a, 10c de la première composante 5a sont reliées mécaniquement à la partie centrale 21c à l'extrémité 22a, 22b de la traverse de parclose 4 ;
- la partie de la face extérieure 38a de la partie supérieure 10a de la première composante 5a, comprise entre l'ouverture 9a et le bord arrière de cette partie supérieure 10a est reliée mécaniquement à la partie haute 21a à l'extrémité 22a, 22b de la traverse de parclose 4 ;
- tout ou partie de la face extérieure 38c de la deuxième partie 13b de la partie inférieure 10b de la première composante 5a est reliée mécaniquement au plancher arrière 18a et donc au plancher supérieur 19, et
- tout ou partie de la face extérieure 39c de la partie inférieure 11b de la deuxième composante 5b est reliée mécaniquement au plancher arrière 18a en particulier au plancher supérieur 19.

Le procédé comprend aussi une étape de liaison 36 de la portion de la face intérieure de la partie haute 21a de la traverse de parclose 4 ainsi que de la face intérieure de la partie basse 21b respectivement aux planchers arrière et avant 18a, 18b du plancher 2 de la structure de caisse 1. Lors de cette étape 36, la réalisation de la liaison mécanique est réalisée également à partir de points de soudure.

Ainsi un tel élément de renfort 3 permet de contribuer à la fixation des sièges de rang arrière du véhicule et au rattrapage des dispersions de l'assemblage de la traverse de parclose 4, du profilé 20 de fixation et des planchers supérieur et inférieur 19 entre eux. De plus, l'invention permet de réduire les coûts attachés à l'assemblage du plancher 2 du véhicule et à réduire le temps nécessaire à la réalisation des opérations liées à la mise en œuvre d'un tel assemblage.

## Revendications

1. Procédé de montage d'un plancher (2) d'une structure de caisse (1) d'un véhicule automobile comprenant une traverse de parclose (4) et au moins un élément de renfort (3) pour ladite traverse de parclose (4) agencé à une extrémité (22a, 22b) de ladite traverse de parclose (4), l'élément de renfort (3) étant pourvu de première, deuxième et troisième composantes (5a, 5b, 5c), les première et deuxième composantes (5a, 5b) étant assemblées l'une à l'autre en définissant une zone de fixation (6) à rattrapage de dispersion comprenant la troisième composante (5c) conformée pour coopérer avec un élément de liaison d'un siège arrière dudit véhicule, le procédé comprenant une étape de mise en place (29) dudit au moins un élément de renfort (3) entre la traverse de parclose (4) et un plancher arrière (18a) du plancher (2) de la structure de caisse (1) et une étape de fixation (34) dudit au moins un élément de renfort (3) à ladite traverse de parclose (4) et audit plancher arrière (18a).

2. Procédé selon la revendication précédente, **caractérisé en ce qu'**il comprend une étape d'assemblage (28) des première et deuxième composantes (5a, 5b) de l'élément de renfort (3) entre elles en définissant une zone de fixation (6) à rattrapage de dispersion comprenant une troisième composante (5c) de cet élément de renfort (3).

3. Procédé selon la revendication 1 ou 2, **caractérisé en ce que** la zone de fixation (6) dudit élément de renfort (3) comprend un logement (7) comportant la troisième composante (5c), cette dernière étant constituée d'une plaquette de fixation.

4. Procédé selon l'une des revendications précédentes, **caractérisé en ce que** la troisième composante (5c) est agencée mobile dans une enceinte d'un logement (7) de la zone de fixation (6) en étant susceptible de réaliser des déplacements en translation selon une direction longitudinale (X) et/ou une direction transversale (Y).

5. Procédé selon l'une des revendications précédentes, **caractérisé en ce qu'**un logement (7) de la zone de fixation (6) comprend des parois supérieure et inférieure (8a, 8b) pourvues chacune d'une ouverture (9a, 9b), et/ou
un logement (7) de la zone de fixation (6) comprend des parois latérales, avant et arrière (8c, 8d, 8e) définies dans une partie supérieure (11a) de la deuxième composante (5b) et qui sont reliées entre elles uniquement par une paroi inférieure (8b) dudit logement (7), et/ou
les parois supérieure et inférieure (8a, 8b) d'un logement (7) de la zone de fixation (6) sont définies respectivement dans des parties supérieures (10a, 11a) des première et deuxième composantes (5a, 5b).

6. Procédé selon l'une des revendications précédentes, **caractérisé en ce que** les première et deuxième composantes (5a, 5b) comprennent :
des premières régions de fixation permettant de les relier mécaniquement l'une à l'autre, et/ou
des deuxièmes régions de fixation permettant de relier mécaniquement ledit élément de renfort (3) à la traverse de parclose (4), et/ou des troisièmes régions de fixation permettant de relier mécaniquement ledit élément de renfort (3) au plancher (2) de la structure de caisse (1) dans la zone du plancher arrière (18a).

## Patentansprüche

1. Verfahren zur Montage eines Bodens (2) einer Karosseriestruktur (1) eines Kraftfahrzeugs, umfassend einen Querträger (4) und mindestens ein Verstärkungselement (3) für den Querträger (4), das an einem Ende (22a, 22b) des Querträgers (4) angeordnet ist, wobei das Verstärkungselement (3) mit ersten, zweiten und dritten Bauteilen (5a, 5b, 5c) versehen ist, wobei das erste und das zweite Bauteil (5a, 5b) aneinander montiert sind und dabei einen abweichungsausgleichenden Befestigungsbereich (6) definieren, der das dritte Bauteil (5c) umfasst, das dazu ausgebildet ist, mit einem Verbindungselement eines Rücksitzes des Fahrzeugs zusammenzuwirken, wobei das Verfahren einen Schritt des Anordnens (29) des mindestens einen Verstärkungselements (3) zwischen dem Querträger (4) und einem rückwärtigen Boden (18a) des Bodens (2) der Karosseriestruktur (1) und einen Schritt des Befestigens (34) des mindestens einen Verstärkungselements (3) am Querträger (4) und am rückwärtigen Boden (18a) umfasst.

2. Verfahren nach dem vorhergehenden Anspruch, **dadurch gekennzeichnet, dass** es einen Schritt des Montierens (28) des ersten und des zweiten Bauteils (5a, 5b) des Verstärkungselements (3) untereinander umfasst, wobei ein abweichungsausgleichender Befestigungsbereich (6) gebildet wird, der ein drittes Bauteil (5c) dieses Verstärkungselements (3) umfasst.

3. Verfahren nach Anspruch 1 oder 2, **dadurch gekennzeichnet, dass** der Befestigungsbereich (6) des Verstärkungselements (3) eine Aufnahme (7) umfasst, die das dritte Bauteil (5c) beinhaltet, wobei Letzteres aus einer Befestigungsplatte besteht.

4. Verfahren nach einem der vorhergehenden Ansprüche, **dadurch gekennzeichnet, dass** das dritte Bauteil (5c) beweglich in einem Raum einer Aufnahme (7) des Befestigungsbereichs (6) angeordnet ist und geeignet ist, translatorische Bewegungen entlang einer Längsrichtung (X) und/oder einer Querrichtung (Y) auszuführen.

5. Verfahren nach einem der vorhergehenden Ansprüche, **dadurch gekennzeichnet, dass** eine Aufnahme (7) des Befestigungsbereichs (6) obere und untere Wände (8a, 8b) umfasst, die jeweils mit einer Öffnung (9a, 9b) versehen sind, und/oder
eine Aufnahme (7) des Befestigungsbereichs (6) seitliche, vordere und rückwärtige Wände (8c, 8d, 8e) umfasst, die in einem oberen Teil (11a) des zweiten Bauteils (5b) definiert sind und die untereinander nur durch eine untere Wand (8b) der Aufnahme (7) verbunden sind, und/oder
die obere und die untere Wand (8a, 8b) einer Aufnahme (7) des Befestigungsbereichs (6) in oberen Teilen (10a, 11a) des ersten beziehungsweise des zweiten Bauteils (5a, 5b) definiert sind.

6. Verfahren nach einem der vorhergehenden Ansprüche, **dadurch gekennzeichnet, dass** das erste und das zweite Bauteil (5a, 5b) umfassen:
erste Befestigungsregionen, die es ermöglichen, sie mechanisch miteinander zu verbinden, und/oder zweite Befestigungsregionen, die es ermöglichen, das Verstärkungselement (3) mechanisch mit dem Querträger (4) zu verbinden, und/oder
dritte Befestigungsregionen, die es ermöglichen, das Verstärkungselement (3) mechanisch mit dem Boden (2) der Karosseriestruktur (1) im Bereich des rückwärtigen Bodens (18a) zu verbinden.

## Claims

1. Method for mounting a floor (2) of a body structure (1) of a motor vehicle comprising a separator crossmember (4) and at least one reinforcing element (3) for said separator crossmember (4) arranged at an end (22a, 22b) of said separator crossmember (4), the reinforcing element (3) being provided with first, second and third components (5a, 5b, 5c), the first and second components (5a, 5b) being assembled to one another while defining a dispersion-compensating fastening region (6) comprising the third component (5c) configured to cooperate with a connection element of a rear seat of said vehicle, the method comprising a step (29) of placing said at least one reinforcing element (3) between the separator crossmember (4) and a rear floor (18a) of the floor (2) of the body structure (1) and a step (34) of fastening said at least one reinforcing element (3) to said separator crossmember (4) and to said rear floor (18a).

2. Method according to the preceding claim, **characterized in that** it comprises a step (28) of assembling the first and second components (5a, 5b) of the reinforcing element (3) to one another while defining a dispersion-compensating fastening region (6) comprising a third component (5c) of this reinforcing element (3).

3. Method according to Claim 1 or 2, **characterized in that** the fastening region (6) of said reinforcing element (3) comprises a housing (7) comprising the third component (5c), the latter being constituted by a fastening plate.

4. Method according to one of the preceding claims, **characterized in that** the third component (5c) is arranged movably in an enclosure of a housing (7) of the fastening region (6) while being capable of performing translational movements in a longitudinal direction (X) and/or a transverse direction (Y).

5. Method according to one of the preceding claims, **characterized in that** a housing (7) of the fastening region (6) comprises upper and lower walls (8a, 8b) each provided with an opening (9a, 9b), and/or
a housing (7)of the fastening region (6) comprises front and rear lateral walls (8c, 8d, 8e) defined in an upper part (11a) of the second component (5b) and connected to one another only by a lower wall (8b) of said housing (7), and/or
the upper and lower walls (8a, 8b) of a housing (7) of the fastening region (6) are defined respectively in upper parts (10a, 11a) of the first and second components (5a, 5b).

6. Method according to one of the preceding claims, **characterized in that** the first and second components (5a, 5b) comprise:
first fastening regions for connecting them mechanically to one another, and/or
second fastening regions for mechanically connecting said reinforcing element (3) to the separator crossmember (4), and/or
third fastening regions for mechanically connecting said reinforcement element (3) to the floor (2) of the body structure (1) in the region of the rear floor (18a).
